# EUROPÄISCHE PATENTSCHRIFT

(11) **EP 3 543 082 B1**
(45) Veröffentlichungstag und Bekanntmachung des Hinweises auf die Patenterteilung: **27.03.2024**
(21) Anmeldenummer: 19152045.1
(22) Anmeldetag: 16.01.2019
(51) Int. Cl.: B60W 50/14, B60W 50/16, B60W 50/08, B60W 50/10, B60W 50/00, B60W 40/08

(54) **VERFAHREN ZUM BETREIBEN EINES AUTONOMEN ODER TEILAUTONOMEN KRAFTFAHRZEUGS**
METHOD FOR OPERATING AN AUTONOMOUS OR PARTIALLY AUTONOMOUS MOTOR VEHICLE
PROCÉDÉ DE FONCTIONNEMENT D'UN VÉHICULE AUTOMOBILE AUTONOME OU PARTIELLEMENT AUTONOME

(30) Priorität: 23.03.2018 DE 102018106941
(43) Veröffentlichungstag der Anmeldung: 25.09.2019
(73) Patentinhaber: MAN Truck & Bus SE, 80995 München (DE)
(72) Erfinder: Haider, Michael, 83126 Flintsbach (DE); Rupprecht, Robert, 80689 München (DE)
(74) Vertreter: v. Bezold & Partner Patentanwälte - PartG mbB

(56) Entgegenhaltungen:
- DE-A1-102012 205 675
- DE-A1-102012 213 965
- DE-A1-102012 221 090
- DE-A1-102015 224 555

## Beschreibung

Die Erfindung betrifft ein Verfahren zum Betreiben eines Kraftfahrzeugs, das in einem Betriebsmodus mit teilautonomer oder autonomer Fahrzeugführung und in einem durch einen Fahrer kontrollierten Betriebsmodus betreibbar ist.

Ein aktueller Entwicklungstrend neben der Elektrifizierung des Antriebstrangs ist der Ausbau von Fahrerassistenzsysteme. Hierbei können die Systeme durch Sensorik soweit ausgebaut werden, dass das Auto selbstständig innerhalb gewisser Voraussetzungen autonom fahren kann.

In Gefahrensituationen oder nicht-standardisierten Fahrsituationen, wie z. B. Stau, Baustelle, unbefestigtes Gelände (z. B. Feldweg, Grundstückseinfahrt), kann es notwendig sein, die Kontrolle über das Kraftfahrzeug aus einem teilautonomen oder autonomen Betriebsmodus wieder an den Fahrer bzw. Lenker zurückzugeben. Hierbei kann es bspw. notwendig sein, dass die Übergabe unmittelbar innerhalb eines Zeitbereichs erfolgt. Um eine erfolgreiche Übergabe zu ermöglichen, ist eine ständige Aufmerksamkeit des Fahrers des Kraftfahrzeugs auch während des autonomen Betriebsmodus notwendig. Um die Aufmerksamkeit des Fahrers während des autonomen Betriebsmodus sicherzustellen, kann diese bspw. mit technischen Mitteln überwacht werden.

Aus der DE 10 2012 221 090 A1 ist ein Verfahren und ein System bekannt, die die Aufmerksamkeit des Fahrers während des Fahrens managen. Ein Verfahren kann durch einen Sensor Eigenschaften eines Fahrers detektieren, auf der Grundlage der detektierten Eigenschaften des Fahrers bestimmen, ob der Fahrer eine ausreichende Überwachungssteuerung des Fahrzeugs ausübt und eine Reihe einer oder mehrerer Aufforderungen bereitstellen. Die Eindringlichkeit jeder Aufforderung hängt mit der Bestimmung zusammen, ob der Fahrer eine ausreichende Überwachungssteuerung des Fahrzeugs ausübt.

Die DE 10 2015 224 555 A1 betrifft ein Verfahren zum Betreiben eines Kraftfahrzeugs mit einer Vorrichtung zur Aufforderung des Fahrers zur Interaktion. Das Kraftfahrzeug kann wenigstens in einem Betriebsmodus mit teilautonomer oder autonomer Fahrzeugführung und in einem Betriebsmodus mit einer durch den Fahrer kontrollierten Fahrzeugführung betrieben werden. Bei einem Betreiben der teilautonomen oder autonomen Fahrzeugführung wird eine Reaktion des Fahrers in Bezug auf eine Aufforderung zur Interaktion überprüft. Bei der Überprüfung der Reaktion des Fahrers werden eine Blickrichtung des Fahrers und eine Lautäußerung des Fahrers berücksichtigt.

Die DE 10 2013 206 212 A1 offenbart ein Verfahren zur Steuerung eines Fahrzeugs, wobei das Fahrzeug wenigstens in einem Betriebsmodus mit autonomer Fahrzeugführung und in einem fahrerkontrollierten Betriebsmodus betrieben werden kann. In dem Betriebsmodus mit autonomer Fahrzeugführung wird eine Überwachung der Fahreraufmerksamkeit vorgenommen, um eine möglicherweise erforderlich werdende Übernahme der Kontrollverantwortung durch den Fahrer innerhalb eines vorgegebenen Übernahmezeitfensters sicherzustellen. Hierzu werden zeitweise, ggf. auch mehrfach, dem Fahrer kognitiv fordernde Aufgaben über eine Mensch-Maschine- Schnittstelle gestellt, und aus der Antwort hierauf die Fahreraufmerksamkeit bestimmt.

Bekannte Überwachungssysteme können bspw. dahingehend nachteilig sein, dass diese gegen unbewusste oder bewusste Manipulation nicht oder nicht ausreichend sicher sind. Zum Beispiel kann eine Sonnenbrille das Verfolgen einer Blickbewegung unmöglich machen. Andererseits können bewusst oder unbewusst platzierte Gegenstände eine Hand "vortäuschen", die einen Taster betätigt, mit dem der Fahrer eigentlich dessen Aufmerksamkeit aktiv bestätigen soll.

Ferner muss mit Blick auf den Nutzfahrzeugbereich beachtet werden, dass hier höhere Lasten und auch mehr Menschen transportiert werden können. Hier ist also höhere Aufmerksamkeit notwendig als bspw. im PKW-Bereich. Z. B. kann in Gefahrensituationen eine nicht aktive Anwesenheit des Fahrers (z. B. Schlafen oder Verlassen des Sitzes) zu schweren Unfällen und zu Regressionshaftungen gegenüber dem Hersteller führen.

Die DE 10 2012 213965 A1 betrifft ein Verfahren zum Gewährleisten einer ausreichenden Leistungsfähigkeit eines Fahrers eines Kraftfahrzeugs beim automatisierten Fahren des Kraftfahrzeugs. Gemäß dem Verfahren wird der Fahrer beim automatisierten Fahren fortlaufend in zeitlichen Abständen aufgefordert, jeweils eine unterschiedliche Aufgabe im Fahrzeug durchzuführen. Vorzugsweise wird der Fahrer in unregelmäßigen zeitlichen Abständen aufgefordert, unterschiedliche Aufgaben im Fahrzeug durchzuführen, d. h. die zeitlichen Abstände zwischen jeweils zwei aufeinanderfolgenden Aufforderungen sind ungleich und schwanken über der Zeit.

Die DE 10 2012 205675 A1 betrifft ein Verfahren zum Betreiben eines Fahrzeugs, wobei ein Aktivierungswunsch für eine Aktivierung einer Steuerung zum Führen des Fahrzeugs erfasst wird und wobei bei einer Aktivierung der Steuerung diese sich nach einer Zeitdauer automatisch und warnhinweislos deaktiviert. Es findet also beispielsweise keine Ankündigung derart statt, dass sich die Steuerung in einer bestimmten Zeit, beispielsweise 20 Sekunden, 10 Sekunden oder 5 Sekunden, deaktivieren wird. Das automatische Deaktivieren kann somit jederzeit unmittelbar durchgeführt werden. Die Steuerung lässt den Fahrer also gezielt im Unklaren darüber, wie lange sie noch aktiviert sein wird. Nach einer Ausführungsform kann vorgesehen sein, dass die Zeitdauer einem Zufallswert entsprechend festgelegt wird. Das heißt also insbesondere, dass es sich bei der Zeitdauer um eine zufällige Zeitdauer handelt.

Der Erfindung liegt die Aufgabe zu Grunde, ein alternatives und/oder verbessertes Verfahren zu schaffen, mit dem insbesondere Nachteile im Stand der Technik überwunden werden können. Insbesondere soll das Verfahren sicherer gegen bewusste und unbewusste Manipulation sein.

Die Aufgabe wird gelöst durch ein Verfahren gemäß dem unabhängigen Anspruch 1. Vorteilhafte Weiterbildungen sind in den abhängigen Ansprüchen und der Beschreibung angegeben.

Das Verfahren ist zum Betreiben eines Kraftfahrzeugs, das in einem Betriebsmodus mit teilautonomer oder autonomer Fahrzeugführung und in einem durch einen Fahrer (im Wesentlichen vollständig) kontrollierten Betriebsmodus betreibbar ist, geeignet. Das Verfahren weist ein Auffordern des Fahrers zur (z. B. aktiven oder passiven) Bestätigung von dessen Aufmerksamkeit während eines Betriebs des Kraftfahrzeugs im Betriebsmodus mit teilautonomer oder autonomer Fahrzeugführung auf. Das Auffordern wird in zufälligen und/oder sich verändernden Zeitabständen wiederholt. Alternativ oder zusätzlich wird das Auffordern durchgeführt, wenn (z. B. durch ein Navigationsgerät und/oder Fahrzeugsensorik) erfasst wird, dass ein vorausliegender (z. B. im Navigationsgerät programmierter oder von der Fahrzeugsensorik erfasster) Streckenabschnitt im Wesentlichen frei von mindestens einer vorbestimmten Straßenbedingungsveränderung und/oder einer vorbestimmten Fahrbedingungsveränderung ist. Das Verfahren kann somit gegen unbewusste und bewusste Manipulation gesichert sein. Beispielsweise kann der zufällige und/oder sich verändernde Zeitabstand zwischen aufeinanderfolgenden Aufforderungen dazu führen, dass der Fahrer seinen Fahrersitz nach einer Aufforderung nicht verlässt, da er nicht weiß, wann die nächste Aufforderung erfolgt. In bekannten Systemen wurden die Aufforderungen in immer gleichen, vorbestimmten Zeitabständen ausgegeben, sodass ein Fahrer des Kraftfahrzeugs sich darauf einstellen konnte. Somit konnte der Fahrer bei der herkömmlichen Technik den Fahrersitz nach einer Aufforderung verlassen, in dem Wissen, dass die nächste Aufforderung erst wieder in beispielsweise 5 Minuten erfolgt. Zusätzlich ermöglicht das Verfahren, dass insbesondere in vorausliegenden Streckenabschnitten, in denen keine Gefahrsituationen oder lediglich standardisierte oder standardisierbare Fahrsituationen zu erwarten sind, Aufforderungen ausgegeben werden. Gerade in diesen Streckenabschnitten neigt der Fahrer zur Unaufmerksamkeit und/oder zum Verlassen des Fahrersitzes.

Insbesondere können die zufälligen und/oder sich verändernden Zeitabstände innerhalb eines vorbestimmten Zeitintervalls liegen, z. B. zwischen 1 min und 10 min.

Die zufälligen und/oder sich verändernden Zeitabstände werden unter Berücksichtigung von Standortinformationen und/oder Kartendaten eines Navigationsgeräts bestimmt, insbesondere berechnet. Zum Beispiel kann eine geschätzte Entfernungszeit zwischen zwei geometrischen Punkten (z. B. Startpunkt und Zielpunkt) berücksichtigt werden, z. B. 30 Minuten. Zweckmäßig können die Zeitabstände und/oder das Zeitintervall bezüglich der Entfernungszeit angepasst sein, sodass zumindest einmal, vorzugsweise mehrmals, innerhalb der Entfernungszeit aufgefordert wird, z. B. in gleichen oder ungleichmäßigen Zeitabständen (z. B. nach 2 min, nach 5 min und nach 17 min).

Zweckmäßig können die sich verändernden Zeitabstände vorbestimmt bzw. programmiert sein und z. B. in einer Abfragetabelle gespeichert sein. Es ist möglich, dass ein Zugriff auf die Abfragetabelle zufällig erfolgt.

Es ist auch möglich, dass ein (Vor-) Einstellung hinsichtlich der Funktion des Aufforderns, der zufälligen und/oder sich verändernden Zeitabstände, der vorbestimmten Straßenbedingungsveränderungen und/oder der vorbestimmten Fahrbedingungsveränderungen nur herstellerseitig vorgenommen werden kann, nicht überschreibbar ist, nicht veränderbar ist, geschützt abgespeichert ist und/oder nur mit einem Passwort veränderbar ist.

Es ist ferner auch möglich, dass das Auffordern nicht abschaltbar ist und/oder automatisch ausgeführt wird, wenn das Kraftfahrzeug im Betriebsmodus mit teilautonomer oder autonomer Fahrzeugführung betrieben wird.

In einem besonders bevorzugten Ausführungsbeispiel wird das Auffordern in Abhängigkeit von einer Geschwindigkeit des Kraftfahrzeugs durchgeführt wird und/oder das Auffordern erst ab einer vorbestimmten Geschwindigkeit (z. B. 15 km/h oder mehr) des Kraftfahrzeugs durchgeführt. Alternativ oder zusätzlich wird ein Intervall zwischen den Aufforderungen mit einer zunehmenden Geschwindigkeit des Kraftfahrzeugs verkürzt und/oder bei einer abnehmenden Geschwindigkeit des Kraftfahrzeugs verlängert. Damit kann beispielsweise verhindert werden, dass ein Fahrer im Stau, in dem keine übermäßige Fahreraufmerksamkeit notwendig ist, Aufforderungen oder zu viele Aufforderungen zur Bestätigung der Aufmerksamkeit erhält.

In einem Ausführungsbeispiel wird der Fahrer nicht über die zufälligen und/oder sich verändernden Zeitabstände informiert.

In einem weiteren Ausführungsbeispiel wird das Auffordern beim Befahren des Streckenabschnitts wiederholt durchgeführt, insbesondere in zufälligen und/oder sich verändernden Zeitabständen.

In einer Ausführungsform weist die mindestens eine Straßenbedingungsveränderung eine Kreuzung, eine Straßengabelung, eine Geschwindigkeitsbegrenzungsveränderung, eine Baustelle, eine Autobahnauffahrt, eine Autobahnabfahrt, eine Spurverengung, eine Spurerweiterung und/oder ein Gefälle auf. Alternativ oder zusätzlich weist die mindestens eine Fahrbedingungsveränderung einen Stau, eine Verkehrsflussveränderung, eine Verkehrsdichteveränderung und/oder einen Verkehrsunfall auf. Insbesondere wenn keine Kreuzungen, keine Baustellen, kein Stau usw. zu erwarten ist, kann der Fahrer des Kraftfahrzeugs dazu neigen, seine Aufmerksamkeit zu verringern und/oder den Fahrersitz zu verlassen. Mit dem vorliegenden Verfahren kann insbesondere diesem Fehlverhalten des Fahrers begegnet werden.

In einer weiteren Ausführungsform wird das Auffordern mittels eines akustischen, visuellen und/oder haptischen Signals an den Fahrer ausgegeben.

In einer Ausführungsvariante weist das Verfahren ferner ein Ausgeben eines akustischen, visuellen und/oder haptischen Warnsignals auf, wenn keine Bestätigung des Fahrers innerhalb einer vorgebebenen Zeitspanne (z.B. 5 bis 10 Sekunden) nach dem Auffordern erfolgt. Alternativ oder zusätzlich erfolgt ein Zwangsbremsen des Kraftfahrzeugs, wenn, insbesondere wiederholt, keine Bestätigung des Fahrers innerhalb einer vorgegebenen Zeitspanne (z. B. 5 bis 10 Sekunden) nach dem Auffordern erfolgt.

In einer weiteren Ausführungsvariante weist die Bestätigung durch den Fahrer ein Betätigen einer, insbesondere berührungsempfindlichen oder berührungslosen, Eingabeeinrichtung auf.

In einem Ausführungsbeispiel wird geprüft, ob die Eingabeeinrichtung vor dem Auffordern und/oder nach dem Betätigen unbetätigt ist. Damit kann verhindert werden, dass das Eingabegerät so manipuliert ist, dass es immer betätigt ist (zum Beispiel durch Anbringen eines Klebestreifens usw.), sodass der Fahrer seine Aufmerksamkeit trotz Aufforderung nicht mehr selbst bestätigen muss und stattdessen beispielsweise den Fahrersitz während des autonomen Betriebsmodus verlassen kann.

In einem weiteren Ausführungsbeispiel ist ein mehrmaliges Betätigen (z. B. innerhalb eines vorbestimmten Zeitintervalls, wie 1 Sekunde, 2 Sekunden oder 3 Sekunden, oder ohne vorbestimmtes Zeitintervall) die Eingabeeinrichtung nach dem Auffordern notwendig. Auch hiermit kann eine einfache Manipulation verhindert werden.

In einer Ausführungsform weist die Eingabeeinrichtung einen berührungsempfindlichen Schalter, ein berührungsempfindliches Tastfeld, eine berührungsempfindliche Sensorhaut und/oder ein berührungsempfindliches Pedal auf. Beispielsweise kann die Eingabeeinrichtung in einem Lenkrad, einem Schaltknauf, einem Armaturenbrett, einem Dachhimmel, einer Armlehne, einer A-Säule, einer B-Säule usw. integriert sein.

In einer alternativen oder zusätzlichen Ausführungsform weist die Eingabeeinrichtung eine berührungslose Lichtschranke, eine berührungslose Lasererfassungseinheit, eine berührungslose Ultraschallerfassungseinheit und/oder eine berührungslose Bilderfassungseinheit auf.

Beispielsweise kann die Eingabeeinrichtung in einem Lenkrad, einem Schaltknauf, einem Armaturenbrett, einem Dachhimmel, einer Armlehne, einer A-Säule, einer B-Säule usw. integriert sein.

Zusätzlich kann eine zulässige aktive Bestätigung durch den Fahrer erfordern, dass geprüft wird, ob tatsächlich menschliche Körperteile (zum Beispiel Finger, Handballen, Handteller, Hände, Arme, Füße, Beine usw.) zur Betätigung genutzt werden.

In einer weiteren alternativen oder zusätzlichen Ausführungsform weist die Eingabeeinrichtung einen Temperatursensor auf, wobei für eine zulässige Bestätigung geprüft wird, ob eine zulässige Temperatur, insbesondere eine menschliche Normalkörpertemperatur (ca. 36,5°C - 37,4°C), gemessen wird. Alternativ oder zusätzlich weist die Eingabeeinrichtung zwei mittels eines Körperteils zu verbindende Elektroden eines Stromkreises auf, wobei für eine zulässige Bestätigung geprüft wird, ob ein zulässiger Widerstand, insbesondere ein menschlicher Normalkörperwiderstand (z. B. ca. 500 Ω bis 1000 Ω, abhängig vom Körperteil), gemessen wird.

In einer Ausführungsvariante ist die Eingabeeinrichtung nur vom Fahrersitz des Kraftfahrzeugs aus erreichbar. Damit kann beispielsweise verhindert werden, dass der Fahrer seinen Fahrersitz verlässt und beispielsweise auf einem Beifahrersitz Platz nimmt oder sich in eine Schlafkoje legt.

In einer weiteren Ausführungsvariante weist das Verfahren ferner ein Überwachen einer Anwesenheit des Fahrers auf einem Fahrersitz des Kraftfahrzeugs während des Betriebs des Kraftfahrzeugs im Betriebsmodus mit teilautonomer oder autonomer Fahrzeugführung (z. B. mittels Sitzsensor und/oder Lenkradsensor) auf. Alternativ oder zusätzlich weist das Verfahren ein Überwachen eines Zustands (z. B. Wachheit, Herzschlag, Kreislauf usw.) des Fahrers während des Betriebs des Kraftfahrzeugs im Betriebsmodus mit teilautonomer oder autonomer Fahrzeugführung auf.

Zweckmäßig können sich die hierin verwendeten Ausdrücke "Betriebsmodus mit teilautonomer oder autonomer Fahrzeugführung" auf ein Fahrsystem beziehen, das eines oder mehrere autonome Elemente enthält, die die Fahrzeugbewegung auf einer Straße steuern, wobei sie das Fahrzeug vollständig autonom (z. B. keine Fahrereingabe oder -steuerung erforderlich) oder teilweise autonom (z. B. einige Fahrereingabe oder -steuerung für das sichere Fahren erforderlich) machen. Steuermerkmale mit beschränkter Fähigkeit zum autonomen, semiautonomen, automatisierten oder automatischen Fahren (z. B. automatisierte Fahrspurverfolgung, adaptive Fahrspurverfolgung, adaptiver Tempomat usw.) können die Position und Geschwindigkeit eines Fahrzeugs in Bezug auf die Straße und auf andere Fahrzeuge und Hindernisse auf der Straße mit verringerter Fahrereingabe (z. B. mit verringerter oder ohne Fahrerlenkradbewegung oder Fahrpedal- und Bremspedalsteuerung) aufrechterhalten oder steuern.

Die Erfindung ist auch auf ein Kraftfahrzeug, insbesondere ein Nutzfahrzeug (zum Beispiel Lastkraftwagen oder Omnibus), mit einer Steuerung, die zum Ausführen eines Verfahrens wie hierin offenbart eingerichtet ist, gerichtet.

Der Begriff "Steuerung" kann sich auf eine Elektronik und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Es ist auch möglich, die Vorrichtung wie hierin offenbart für Personenkraftwagen, geländegängige Fahrzeuge usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein Ablaufdiagramm für ein beispielhaftes Verfahren zum Betreiben eines Kraftfahrzeugs gemäß der vorliegenden Offenbarung; und
- Figur 2: eine Innenansicht eines beispielhaften Fahrerhauses eines Nutzfahrzeugs gemäß der vorliegenden Offenbarung.

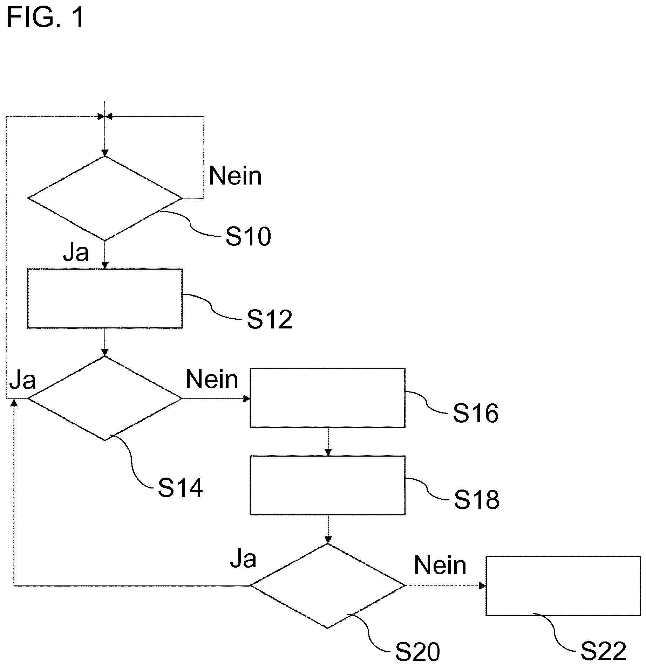

Die Figur 1 zeigt ein Verfahren zum Betreiben eines Kraftfahrzeugs gemäß einem Ausführungsbeispiel. Das Verfahren dient zum Überprüfen und Halten einer Fahreraufmerksamkeit während eines teilautonomen oder eines autonomen Fahrbetriebs des Kraftfahrzeugs. Das Kraftfahrzeug kann beispielsweise ein Personenkraftwagen sein. Insbesondere ist das Kraftfahrzeug ein Nutzfahrzeug, zum Beispiel ein Omnibus oder ein Lastkraftwagen.

In einer Abfrage S10 wird geprüft, ob das Kraftfahrzeug aktuell in einem teilautonomen oder einem autonomen Betriebsmodus betrieben wird. Die Abfrage S10 wird so lange durchgeführt, bis erfasst wird, dass das Kraftfahrzeug in einem teilautonomen oder einem autonomen Betriebsmodus betrieben wird. Befindet sich das Kraftfahrzeug in einem teilautonomen oder einem autonomen Betriebsmodus, so wird mit einem Verfahrensschritt S12 fortgefahren.

Im Verfahrensschritt S12 wird der Fahrer des Kraftfahrzeugs dazu aufgefordert, eine Bestätigung seiner Aufmerksamkeit durchzuführen. Die Aufforderung kann beispielsweise akustisch, visuell und/oder haptisch erfolgen.

Die Aufforderung ist u. a. dazu gedacht, den Fahrer des Kraftfahrzeugs während eines teilautonomen oder eines autonomen Betriebsmodus des Kraftfahrzeugs in einem aktiven und aufmerksamen Zustand (z. B. nicht schlafen oder den Fahrersitz nicht verlassen) zu halten. Somit kann sichergestellt werden, dass im Notfall eine sehr schnelle Reaktionszeit gewährleistet ist. So kann in Gefahrensituationen oder nicht-standardisierten Fahrsituationen eine Übergabe an einen anwesenden und aufmerksamen Fahrer sicher erfolgen.

Ferner ist die Aufforderung gemäß dem Verfahrensschritt S12 so eingerichtet, dass eine Manipulation durch den Fahrer zumindest deutlich erschwert ist.

Beispielsweise kann die Aufforderung in zufälligen und/oder sich verändernden Zeitabständen wiederholt werden. Dadurch, dass der Fahrer nicht über die zufälligen und/oder sich verändernden Zeitabständen informiert wird, kann der Fahrer nicht vorhersehen, wann die nächste Aufforderung gestellt wird. So kann verhindert werden, dass sich der Fahrer zwischen den Aufforderungen vom Fahrersitz entfernt oder sich anderweitig ablenkt.

Zusätzlich oder alternativ ist es möglich, dass die Aufforderungen beispielsweise wiederholt dann getätigt werden, wenn in einem vorausliegenden Streckenabschnitt keine Straßenbedingungsveränderungen und/oder Fahrbedingungsveränderungen zu erwarten sind. Gerade auf Streckenabschnitten, auf denen keine Gefahrsituationen oder nicht-standardisierte Situationen zu erwarten sind, kann der Fahrer dazu neigen, den Fahrersitz zu verlassen oder sich anderweitig abzulenken.

Der Streckenabschnitt kann beispielsweise ein programmierter vorausliegender Streckenabschnitt in einem Navigationsgerät sein. Mittels des Navigationsgeräts kann auch erfasst werden, ob dieser Streckenabschnitt im Wesentlichen frei von mindestens einer vorbestimmten Straßenbedingungsveränderung und/oder einer vorbestimmten Fahrbedingungsveränderungen ist. Es ist auch möglich, dass Straßenbedingungsveränderungen und/oder Fahrbedingungsveränderungen bzw. deren Ausbleiben von einer Fahrzeugsensorik bspw. optisch erfasst werden (z. B. optische Erfassung von Verkehrsschildern). Vorbestimmte Straßenbedingungsveränderungen können beispielsweise eine Kreuzung, eine Straßengabelung, eine Geschwindigkeitsbegrenzungsveränderung, eine Baustelle, eine Autobahnauffahrt, eine Autobahnabfahrt, eine Spurverengung, eine Spurerweiterung und/oder ein Gefälle sein. Vorbestimmte Fahrbedingungsveränderungen können beispielsweise einen vorausliegenden Stau, eine vorausliegender Verkehrsflussveränderung, eine vorausliegender Verkehrsdichteveränderung und/oder einen vorausliegenden Verkehrsunfall betreffen.

Um keine unnötigen Aufforderungen beispielsweise in einem Stau oder bei niedriger Geschwindigkeit auszugeben, kann vorgesehen sein, dass die Aufforderung nur ab einer vorbestimmten Geschwindigkeit ausgegeben werden, zum Beispiel 15 km/h oder 20 km/h.

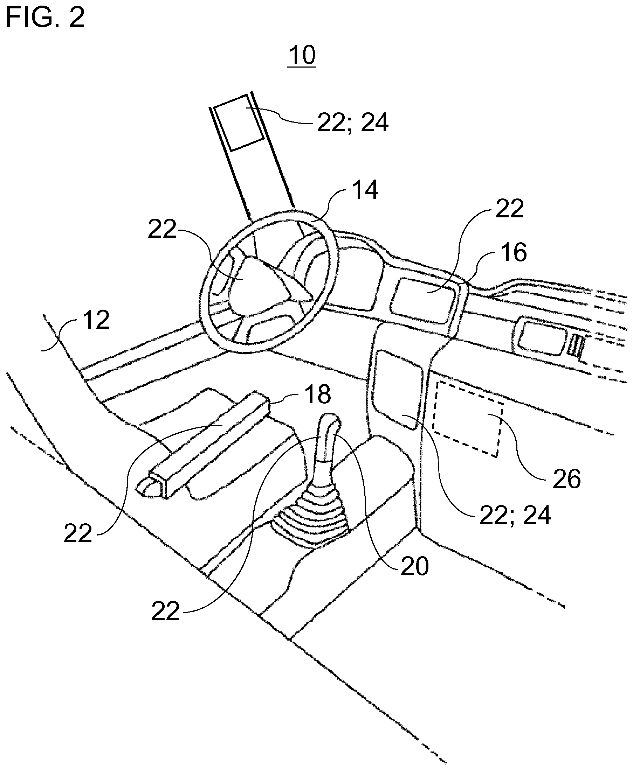

Nach dem Ausgeben der Aufforderung hat der Fahrer eine vorbestimmte Zeitdauer, zum Beispiel 5 bis 10 Sekunden, Zeit, um seine Aufmerksamkeit bspw. aktiv zu bestätigen. Ausführungsbeispiele für derartige aktive Bestätigungen sind hier unter Bezugnahme auf Figur 2 beispielhaft beschrieben.

In einem Verfahrensschritt S14 wird geprüft, ob der Fahrer innerhalb der vorbestimmten Zeitdauer seine Aufmerksamkeit bestätigt hat. Hat der Fahrer seine Aufmerksamkeit bestätigt, so fährt das Verfahren mit dem Verfahrensschritt S10 fort. Hat der Fahrer hingegen seine Aufmerksamkeit nicht bestätigt, so fährt das Verfahren mit einem Verfahrensschritt S16 fort.

Im Verfahrensschritt S16 kann eine visuelle, akustische und/oder optische Warnung an den Fahrer ausgegeben werden, um dessen Aufmerksamkeit zu erhalten. Die Warnung kann beispielsweise einen akustischer Warnton und/oder ein Vibrieren des Lenkrads oder des Fahrersitzes aufweisen. Nach der Warnung kann das Verfahren mit einem Verfahrensschritt S18 fortfahren. Es ist beispielsweise auch möglich, dass der Verfahrensschritt S16 nicht und der Verfahrensschritt S18 direkt im Anschluss an den Verfahrensschritt S14 durchgeführt wird.

Im Verfahrensschritt S18 kann, wie im Verfahrensschritt S12, erneut eine Aufforderung zur Bestätigung der Fahreraufmerksamkeit an den Fahrer ausgegeben werden. In der nachfolgenden Abfrage S18 kann, wie in der Abfrage S14, geprüft werden, ob der Fahrer seine Aufmerksamkeit innerhalb einer vorgegebenen Zeitdauer bestätigt hat. Sofern eine Bestätigung vorliegt, fährt das Verfahren mit dem Verfahrensschritt S10 fort. Liegt hingegen keine Bestätigung innerhalb der vorgegebenen Zeitdauer vor, können weitere Warnungen oder Aufforderungen ausgegeben werden. Schlussendlich kann in einem Verfahrensschritt S22 eine Zwangsbremsung des Kraftfahrzeugs bis zum Stillstand eingeleitet werden.

Es ist möglich, dass während des Verfahrens zusätzlich eine Anwesenheit des Fahrers auf dem Fahrersitz z. B. mittels eines entsprechenden Sitzsensors geprüft wird. Es ist auch möglich, dass beispielsweise Eingabetasten oder Eingabefelder am Lenkrad oder Armaturenbrett oder Navigationsgerät vorgesehen sind, mit denen erfasst wird, ob der Fahrer auf dem Fahrersitz sitzt. Wird erfasst, dass sich der Fahrer von dem Fahrersitz entfernt, können Warnungen und/oder Aufforderungen zur aktiven Bestätigung von dessen Aufmerksamkeit so lange ausgegeben werden, bis die Anwesenheit des Fahrers auf dem Fahrersitz erkannt und ein Bestätigung von dessen Aufmerksamkeit empfangen wurde.

In einigen Ausführungsbeispiel besteht zusätzlich die Möglichkeit, einen Zustand (z. B. Wachheit, Herzschlag, Kreislauf usw.) des Fahrers während des Verfahrens zu überwachen. Beispielsweise kann hierzu eine Verbindung mit einem Herz-Kreislaufmessgerät, das den körperlichen Zustand des Fahrers erfasst, eingerichtet sein. Wird erfasst, dass der Zustand des Fahrers von einem Normalzustand abweicht, können Warnungen und/oder Aufforderungen zur Bestätigung von dessen Aufmerksamkeit ausgegeben werden.

Unter Bezugnahme auf die Figur 2 sind nachfolgend beispielhafte Möglichkeiten aufgezeigt, mit denen der Fahrer des Kraftfahrzeugs in Reaktion auf eine Aufforderung seine Aufmerksamkeit aktiv bestätigen kann. Die Bestätigungseinrichtungen bzw. Eingabeeinrichtungen sind dabei so ausgeführt, dass eine Manipulation durch den Fahrer so weit wie möglich ausgeschlossen wird.

Insbesondere kann vorgesehen sein, dass nicht nur eine einfache Bestätigung, sondern eine doppelte Bestätigung, wie zum Beispiel bei eine Doppelklick bei einer Computermaus, notwendig ist, um die Aufmerksamkeit aktiv zu bestätigen.

Ferner kann eine zulässige aktive Bestätigung durch den Fahrer erfordern, dass die Bestätigungseinrichtung bzw. Eingabeeinrichtung vor oder während des Aufforderns sowie nach der Bestätigung unbetätigt, das heißt beispielsweise frei von irgendwelchen Objekten (materielle oder immaterielle Natur), ist.

Es ist möglich, dass ein Gerät zur Ausgabe der Aufforderung und die Eingabeeinrichtung als integrierte Einheit ausgebildet sind oder dass diese örtlich getrennt voneinander angeordnet sind.

Die Figur 2 zeigt eine Innenansicht eines Fahrerhauses 10. Das Fahrerhaus 10 kann ein Fahrerhaus eines Kraftfahrzeugs, insbesondere eines Nutzfahrzeugs (zum Beispiel Lastkraftwagen oder Omnibus) sein. Das Fahrerhaus 10 kann einen Fahrersitz 12, ein Lenkrad 14, ein Armaturenbrett 16, eine Armlehne 18 und/oder einen Schaltknauf 20 aufweisen.

Die Eingabeeinrichtung zur aktiven Bestätigung der Aufmerksamkeit kann beispielsweise als berührungsempfindliche Eingabeeinrichtung 22 ausgebildet sein. Die berührungsempfindliche Eingabeeinrichtung 22 kann überall dort im Fahrerhaus eingebaut sein, wo beispielsweise eine durchgängige Kabelführung möglich ist. Die berührungsempfindliche Eingabeeinrichtung kann beispielsweise als ein Druckknopf, ein Pedal, ein Taster, ein Schalter, ein Eingabefeld oder eine Sensorhaut ausgebildet sein. Beispielsweise kann die berührungsempfindliche Eingabeeinrichtung am Lenkrad 14, am Armaturenbrett 16, an der Armlehne 18 (z. B. in der Auflagefläche oder am Gelenk), am Schaltknauf 20 und/oder an Fußpedalen oder Tastern im Fußraum bzw. Bodenbereich des Fahrerhauses 10 angeordnet sein. Es ist möglich, dass bestehende Tasten beispielsweise am Lenkrad 14 oder am Armaturenbrett 16 als die berührungsempfindliche Eingabeeinrichtung 22 verwendet werden. Ebenso ist es möglich, die berührungsempfindliche Eingabeeinrichtung 22 separat vorzusehen.

Beispielsweise kann die berührungsempfindliche Eingabeeinrichtung 22 als Taster im Lenkrad 14, zum Beispiel Markenlogo als Druckknopf oder bestehende Knöpfe am Lenkrad 14, ausgebildet sein. Die berührungsempfindliche Eingabeeinrichtung 22 kann beispielsweise auch als Bedienfeld eines Navigationsgeräts oder Informationscenters mit Touchscreen im Armaturenbrett 16 vorgesehen sein.

Wie erwähnt, besteht auch die Möglichkeit, dass das Lenkrad 14, das Armaturenbrett 16, die Armlehne 18, der Schaltknauf 20 und/oder weitere vom Fahrersitz 12 aus erreichbare Bereiche des Fahrerhauses 10 zumindest teilweise mit einer berührungsempfindlichen Sensorhaut überzogen sind. Auch eine Fußbodenmatte oder ein Teil der Fußbodenmatte kann mit einer Sensorhaut überzogen sein. Die Sensorhaut kann beispielsweise wie bei einem bekannten Roboter - Bosch APAS - mit Sensorhaut ausgebildet sein

Es ist auch möglich, als Eingabeeinrichtung zwei Elektroden eines Stromkreises zu verwenden. Die zwei Elektroden können mittels eines Körperteils (z. B. Finger) verbunden werden. Es findet eine Prüfung statt, ob ein zulässiger Widerstand, insbesondere ein menschlicher Normalkörperwiderstand (z. B. zwischen 500 Ω und 1000 Ω), gemessen wird.

Alternativ oder zusätzlich kann die Eingabeeinrichtung zur aktiven Bestätigung der Aufmerksamkeit beispielsweise als berührungslose Eingabeeinrichtung 24 ausgebildet sein. Bei dieser Lösung können bspw. Sensoren eingesetzt werden, die über folgende Wirkprinzipien eine Bestätigung in Form einer Bewegung erkennen: Ultraschall mittels Ultraschallerfassungseinheit (ähnlich wie Parksensor), Entfernungsmessung durch einen Laserstrahl mittels Lasererfassungseinheit, Unterbrechung einer Lichtschranke und/oder Messung einer Temperatur. Es ist auch möglich, eine Bilderfassungseinheit (z. B. Kamera) mit entsprechender Bildauswertungseinheit vorzusehen.

Die berührungslose Eingabeeinrichtung 24 kann z. B. im Armaturenbrett 16, im Dachhimmel oder einer Seitenwand angeordnet sein. Insbesondere kann die berührungslose Eingabeeinrichtung dort angeordnet sein, wo keine Ablage oder einfache Befestigung von Sachen möglich ist.

Die berührungslose Eingabeeinrichtung 24 kann zweckmäßig so einbaut sein, dass eine Bewegung eines Körperteils, z. B eine Handbewegung (Handbewegung in Richtung Sensorfeld oder Handbewegung quer zum Sensorfeld), möglich ist. Beispielsweise kann ein Sensorfeld der berührungslosen Eingabeeinrichtung 24 im Luftbereich zwischen Fahrer und Armaturenbrett enden.

Bei einer Laserstrahlmessung kann ein Laser einer Lasererfassungseinheit so justiert sein, dass ein Laserstrahl in einem Luftbereich zwischen Fahrer und Fahrerhaus auf einen definierten Punkt auftrifft und dies die Referenzstrecke ist. Wenn der Fahrer den Strahl mit einer Bewegung eines Körperteils, z. B. eine Handbewegung, unterbricht, wird die Entfernung kürzer als die Referenzstrecke und als Signal bzw. aktive Bestätigung erkannt.

Bei einer Messung mittels Temperatur kann ein Temperatursensor in Reichweite des Fahrers angeordnet werden, der für eine zulässige Bestätigung bei einer Berührung eine menschliche Körpertemperatur misst. Der Sensor kann entweder direkt sichtbar eingebaut die Messung vornehmen oder indirekt verborgen im Interiordesign, z. B. im Armaturenbrett 16 oder im Lenkrad 14, eingebaut eine Referenztemperatur messen, wobei eine Wärmeleitfähigkeit des Materials, das sich zwischen (z. B.) Hand und Sensor befindet, berücksichtigt wird.

Es wird darauf hingewiesen, dass auch Kombinationen der beispielhaft erläuterten Eingabeeinrichtungen 22, 24 möglich sind.

Im Fahrerhaus 10 oder an anderer Stelle des Kraftfahrzeugs kann zusätzlich eine Steuerung 26 vorgesehen sein, die das Verfahren wie hierin offenbart ausführen kann. Die Steuerung ist hierzu insbesondere in Kommunikationsverbindung mit den Eingabeeinrichtungen 22, 24 und dem Gerät zum Ausgeben der Aufforderung.

Die Erfindung ist nicht auf die vorstehend beschriebenen bevorzugten Ausführungsbeispiele beschränkt. Vielmehr ist eine Vielzahl von Varianten und gemäß den beigefügten Ansprüchen möglich.

### Bezugszeichenliste

- 10: Fahrerhaus
- 12: Fahrersitz
- 14: Lenkrad
- 16: Armaturenbrett / Armaturentafel
- 18: Armlehne
- 20: Schaltknauf
- 22: Berührungsempfindliche Eingabeeinrichtung
- 24: Berührungslose Eingabeeinrichtung
- 26: Steuerung

## Patentansprüche

1. Verfahren zum Betreiben eines Kraftfahrzeugs, das in einem Betriebsmodus mit teilautonomer oder autonomer Fahrzeugführung und in einem durch einen Fahrer kontrollierten Betriebsmodus betreibbar ist, aufweisend:
Auffordern des Fahrers zur Bestätigung von dessen Aufmerksamkeit während eines Betriebs des Kraftfahrzeugs im Betriebsmodus mit teilautonomer oder autonomer Fahrzeugführung, wobei:
das Auffordern in zufälligen und/oder sich verändernden Zeitabständen wiederholt wird, wobei die zufälligen und/oder sich verändernden Zeitabstände unter Berücksichtigung von Standortinformationen und/oder Kartendaten eines Navigationsgeräts bestimmt, insbesondere berechnet, werden; und/oder
das Auffordern durchgeführt wird, wenn erfasst wird, dass ein vorausliegender Streckenabschnitt im Wesentlichen frei von mindestens einer vorbestimmten Straßenbedingungsveränderung und/oder einer vorbestimmten Fahrbedingungsveränderung ist.

2. Verfahren nach Anspruch 1, wobei:
die zufälligen und/oder sich verändernden Zeitabstände innerhalb eines vorbestimmten Zeitintervalls liegen.

3. Verfahren nach Anspruch 1 oder Anspruch 2, wobei:
das Auffordern in Abhängigkeit von einer Geschwindigkeit des Kraftfahrzeugs durchgeführt wird; und/oder
das Auffordern erst ab einer vorbestimmten Geschwindigkeit des Kraftfahrzeugs durchgeführt wird; und/oder
ein Intervall zwischen den Aufforderungen mit einer zunehmenden Geschwindigkeit des Kraftfahrzeugs verkürzt und/oder bei einer abnehmenden Geschwindigkeit des Kraftfahrzeugs verlängert wird.

4. Verfahren nach einem der vorherigen Ansprüche, wobei:
der Fahrer nicht über die zufälligen und/oder sich verändernden Zeitabstände informiert wird; und/oder
das Auffordern beim Befahren des Streckenabschnitts wiederholt durchgeführt wird, insbesondere in zufälligen und/oder sich verändernden Zeitabständen.

5. Verfahren nach einem der vorherigen Ansprüche, wobei:
die mindestens eine vorbestimmte Straßenbedingungsveränderung eine Kreuzung, eine Straßengabelung, eine Geschwindigkeitsbegrenzungsveränderung, eine Baustelle, eine Autobahnauffahrt, eine Autobahnabfahrt, eine Spurverengung, eine Spurerweiterung und/oder ein Gefälle aufweist; und/oder
die mindestens eine vorbestimmte Fahrbedingungsveränderung einen Stau, eine Verkehrsflussveränderung, eine Verkehrsdichteveränderung und/oder einen Verkehrsunfall aufweist.

6. Verfahren nach einem der vorherigen Ansprüche, wobei:
das Auffordern mittels eines akustischen, visuellen und/oder haptischen Signals an den Fahrer ausgegeben wird.

7. Verfahren nach einem der vorherigen Ansprüche, ferner aufweisend:
Ausgeben eines akustischen, visuellen und/oder haptischen Warnsignals, wenn keine Bestätigung des Fahrers innerhalb einer vorgebebenen Zeitspanne nach dem Auffordern erfolgt; und/oder
Zwangsbremsen des Kraftfahrzeugs, wenn, insbesondere wiederholt, keine Bestätigung des Fahrers innerhalb einer vorgegebenen Zeitspanne nach dem Auffordern erfolgt.

8. Verfahren nach einem der vorherigen Ansprüche, wobei die Bestätigung durch den Fahrer aufweist:
Betätigen einer, insbesondere berührungsempfindlichen oder berührungslosen, Eingabeeinrichtung (22, 24).

9. Verfahren nach Anspruch 8, wobei:
geprüft wird, ob die Eingabeeinrichtung (22, 24) vor dem Auffordern und/oder nach dem Betätigen unbetätigt ist; und/oder
ein mehrmaliges Betätigen die Eingabeeinrichtung (22, 24) nach dem Auffordern notwendig ist.

10. Verfahren nach Anspruch 8 oder Anspruch 9, wobei die Eingabeeinrichtung (22) aufweist:
einen berührungsempfindlichen Schalter; und/oder
ein berührungsempfindliches Tastfeld; und/oder
eine berührungsempfindliche Sensorhaut; und/oder
ein berührungsempfindliches Pedal.

11. Verfahren nach einem der Ansprüche 8 bis 10, wobei die Eingabeeinrichtung (24) aufweist:
eine berührungslose Lichtschranke; und/oder
eine berührungslose Lasererfassungseinheit; und/oder
eine berührungslose Ultraschallerfassungseinheit und/oder
eine berührungslose Bilderfassungseinheit.

12. Verfahren nach einem der Ansprüche 8 bis 11, wobei die Eingabeeinrichtung (22, 24) aufweist:
einen Temperatursensor, wobei für eine zulässige Bestätigung geprüft wird, ob eine zulässige Temperatur, insbesondere eine menschliche Normalkörpertemperatur, gemessen wird; und/oder
zwei mittels eines Körperteils zu verbindende Elektroden eines Stromkreises, wobei für eine zulässige Bestätigung geprüft wird, ob ein zulässiger Widerstand, insbesondere ein menschlicher Normalkörperwiderstand, gemessen wird.

13. Verfahren nach einem der Ansprüche 8 bis 12, wobei:
die Eingabeeinrichtung (22, 24) nur vom Fahrersitz (12) des Kraftfahrzeugs aus erreichbar ist.

14. Verfahren nach einem der vorherigen Ansprüche, ferner aufweisend:
Überwachen einer Anwesenheit des Fahrers auf einem Fahrersitz (12) des Kraftfahrzeugs während des Betriebs des Kraftfahrzeugs im Betriebsmodus mit teilautonomer oder autonomer Fahrzeugführung; und/oder
Überwachen eines Zustands des Fahrers während des Betriebs des Kraftfahrzeugs im Betriebsmodus mit teilautonomer oder autonomer Fahrzeugführung.

15. Kraftfahrzeug, insbesondere Nutzfahrzeug, mit einer Steuerung (26), die zum Ausführen eines Verfahrens nach einem der vorherigen Ansprüche eingerichtet ist.

## Claims

1. A method of operating a motor vehicle operable in an operation mode with semi-autonomous or autonomous vehicle control and in an operation mode controlled by a driver, comprising:
prompting the driver to confirm the driver's attention during an operation of the motor vehicle in the operation mode with semi-autonomous or autonomous vehicle control, wherein:
the prompting is repeated at random and/or changing time intervals, the random and/or changing time intervals being determined, in particular calculated, taking into account location information and/or map data of a navigation device; and/or
the prompting is performed when it is detected that a preceding route section is substantially free of at least one predetermined road condition change and/or a predetermined driving condition change.

2. The method according to claim 1, wherein:
the random and/or changing time intervals are within a predetermined time interval.

3. The method according to claim 1 or claim 2, wherein:
the prompting is performed as a function of a speed of the motor vehicle; and/or
the prompting is only carried out from a predetermined speed of the motor vehicle; and/or
an interval between the prompts is shortened with an increasing speed of the motor vehicle and/or extended with a decreasing speed of the motor vehicle.

4. The method according to any one of the previous claims, wherein:
the driver is not informed of the random and/or changing time intervals; and/or
the prompting is performed repeatedly when travelling along the route section, in particular at random and/or changing time intervals.

5. The method according to any one of the previous claims, wherein:
the at least one predetermined road condition change comprises an intersection, a road fork, a speed limit change, a construction site, a motorway entrance, a motorway exit, a lane narrowing, a lane widening and/or a slope; and/or
the at least one predetermined driving condition change comprises a traffic jam, a traffic flow change, a traffic density change and/or a traffic accident.

6. The method according to any one of the previous claims, wherein:
the prompting is output to the driver by means of an acoustic, visual and/or haptic signal.

7. The method according to any one of the previous claims, further comprising:
outputting an acoustic, visual and/or haptic warning signal if there is no confirmation from the driver within a predetermined period of time after the prompting; and/or
forcibly braking the motor vehicle if, in particular repeatedly, there is no confirmation from the driver within a predetermined period of time after the prompting.

8. The method according to any one of the previous claims, wherein the confirmation by the driver comprises:
actuating an, in particular touch-sensitive or touchless, input device (22, 24).

9. The method according to claim 8, wherein:
it is checked whether the input device (22, 24) is unactuated before the prompting and/or after the actuating; and/or
a repeated actuating of the input device (22, 24) after the prompting is necessary.

10. The method according to claim 8 or claim 9, wherein the input device (22) comprises:
a touch-sensitive switch; and/or
a touch-sensitive pad; and/or
a touch-sensitive sensor skin; and/or
a touch-sensitive pedal.

11. The method according to any one of claims 8 to 10, wherein the input device (24) comprises:
a non-contact light barrier; and/or
a non-contact laser detection unit; and/or
a non-contact ultrasonic detection unit; and/or
a non-contact image detection unit.

12. The method according to any one of claims 8 to 11, wherein the input device (22, 24) comprises:
a temperature sensor, wherein for an admissible confirmation it is checked whether an admissible temperature, in particular a human normal body temperature, is measured; and/or
two electrodes of a current circuit to be connected by means of a body part, wherein for an admissible confirmation it is checked whether an admissible resistance, in particular a human normal body resistance, is measured.

13. The method according to any one of claims 8 to 12, wherein:
the input device (22, 24) is only reachable from the driver's seat (12) of the motor vehicle.

14. The method according to any of the previous claims, further comprising:
monitoring a presence of the driver on a driver's seat (12) of the motor vehicle during an operation of the motor vehicle in the operation mode with semi-autonomous or autonomous vehicle control; and/or
monitoring a state of the driver during an operation of the motor vehicle in the operation mode with semi-autonomous or autonomous vehicle control.

15. A motor vehicle, in particular utility vehicle, having a control unit (26) which is configured to perform a method according to any of the preceding claims.

## Revendications

1. Procédé de fonctionnement d'un véhicule automobile qui peut être utilisé dans un mode de fonctionnement avec guidage de véhicule semi-autonome ou autonome et dans un mode de fonctionnement commandé par un conducteur, ledit procédé comprenant les étapes suivantes :
demander au conducteur de confirmer son attention lors de la conduite du véhicule automobile en mode de fonctionnement avec guidage de véhicule semi-autonome ou autonome,
la demande étant répétée à intervalles de temps aléatoires et/ou variables, les intervalles de temps aléatoires et/ou variables étant déterminés, en particulier calculés, avec prise en compte d'informations de localisation et/ou de données cartographiques d'un appareil de navigation ; et/ou
la demande étant exécutée lorsqu'il est détecté qu'une portion d'itinéraire à venir est sensiblement exempte d'au moins un changement prédéterminé de conditions routières et/ou un changement prédéterminé de conditions de conduite.

2. Procédé selon la revendication 1,
les intervalles de temps aléatoires et/ou variables étant situés dans un intervalle de temps prédéterminé.

3. Procédé selon la revendication 1 ou la revendication 2,
la demande étant effectuée en fonction d'une vitesse du véhicule automobile ; et/ou
la demande étant effectuée uniquement à partir d'une vitesse prédéterminée du véhicule automobile ; et/ou
un intervalle entre les demandes étant raccourci à mesure que la vitesse du véhicule automobile augmente et/ou étant allongé à mesure que la vitesse du véhicule automobile diminue.

4. Procédé selon l'une des revendications précédentes,
le conducteur n'étant pas informé des intervalles de temps aléatoires et/ou variables ; et/ou
la demande étant exécutée de manière répétée lors de la conduite sur la portion d'itinéraire, notamment à des intervalles de temps aléatoires et/ou variables.

5. Procédé selon l'une des revendications précédentes,
l'au moins un changement prédéterminé de conditions routières comprenant une intersection, une bifurcation de route, un changement de limite de vitesse, un chantier de construction, une entrée d'autoroute, une sortie d'autoroute, un rétrécissement de voie, un élargissement de voie et/ou une pente ; et/ou
l'au moins un changement prédéterminé de conditions de conduite comportant un embouteillage, un changement de flux de trafic, un changement de densité de trafic et/ou un accident de la circulation.

6. Procédé selon l'une des revendications précédentes,
la demande étant délivrée au conducteur au moyen d'un signal acoustique, visuel et/ou haptique.

7. Procédé selon l'une des revendications précédentes, comprenant en outre les étapes suivantes :
délivrer un signal d'avertissement acoustique, visuel et/ou haptique si aucune confirmation du conducteur n'est effectuée dans un intervalle de temps spécifié après la demande ; et/ou
freiner d'urgence le véhicule automobile si, notamment de manière répétée, aucune confirmation de la part du conducteur n'est effectuée dans un intervalle de temps spécifié après la demande.

8. Procédé selon l'une des revendications précédentes, la confirmation du conducteur inclut l'opération suivante :
actionner un dispositif de saisie (22, 24), en particulier un dispositif de saisie tactile ou sans contact.

9. Procédé selon la revendication 8,
une vérification étant effectuée pour savoir si le dispositif d'entrée (22, 24) n'est pas actionné avant la demande et/ou après l'actionnement ; et/ou
un actionnement multiple du dispositif de saisie (22, 24) étant nécessaire après la demande.

10. Procédé selon la revendication 8 ou la revendication 9, le dispositif d'entrée (22) comportant :
un commutateur tactile ; et/ou
un pavé tactile ; et/ou
une membrane de capteur tactile ; et/ou
une pédale tactile.

11. Procédé selon l'une des revendications 8 à 10, le dispositif de saisie (24) comportant :
une barrière lumineuse sans contact ; et/ou
une unité de détection laser sans contact ; et/ou
une unité de détection à ultrasons sans contact et/ou
une unité de capture d'image sans contact.

12. Procédé selon l'une des revendications 8 à 11, le dispositif de saisie (22, 24) comportant :
un capteur de température, une vérification étant effectuée, en vue d'une confirmation admissible, pour savoir si une température admissible, en particulier une température normale du corps humain, est mesurée ; et/ou
deux électrodes d'un circuit à relier au moyen d'une partie du corps, une vérification étant effectuée, en vue d'une confirmation admissible, pour savoir si une résistance admissible, en particulier une résistance normale du corps humain, est mesurée.

13. Procédé selon l'une des revendications 8 à 12,
le dispositif de saisie (22, 24) n'étant accessible que depuis le siège de conducteur (12) du véhicule automobile.

14. Procédé selon l'une des revendications précédentes, comprenant en outre les étapes suivantes :
surveiller la présence du conducteur dans un siège de conducteur (12) du véhicule automobile pendant le fonctionnement du véhicule automobile en mode de fonctionnement avec guidage de véhicule semi-autonome ou autonome ; et/ou
surveiller un état du conducteur pendant le fonctionnement du véhicule automobile en mode de fonctionnement avec guidage de véhicule semi-autonome ou autonome.

15. Véhicule automobile, notamment véhicule utilitaire, comprenant une commande (26) qui est conçue pour mettre en œuvre un procédé selon l'une des revendications précédentes.
